Europäisches Patentamt

European Patent Office

Office européen des brevets

(19)

(11) **EP 1 065 676 A1**

(12) # DEMANDE DE BREVET EUROPEEN

(43) Date de publication:
**03.01.2001 Bulletin 2001/01**

(51) Int Cl.[7]: **H01F 1/34**, C04B 35/26

(21) Numéro de dépôt: **00401803.2**

(22) Date de dépôt: **23.06.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **29.06.1999 FR 9908319**

(71) Demandeur: **THOMSON-CSF**
**75008 Paris (FR)**

(72) Inventeurs:
- **Lebourgeois, Richard,**
  **Thomson-CSF P.I.Dép.Brevets**
  **94117 Arcueil Cédex (FR)**

- **Ageron, Jérôme, Thomson-CSF P.I.Dép.Brevets**
  **94117 Arcueil Cédex (FR)**
- **Bremaud, Jean-Charles,**
  **Thomson-CSF P.I.Dép.Brevets**
  **94117 Arcueil Cédex (FR)**
- **Peyresoubes, Georges,**
  **Thomson-CSF P.I.Dép.Brevets**
  **94117 Arcueil Cédex (FR)**
- **Joulain, Jean-Pierre,**
  **Thomson-CSF P.I.Dép.Brevets**
  **94117 Arcueil Cédex (FR)**

(54) **Ferrites à faibles pertes**

(57) L'invention concerne un matériau ferrite à base de Nickel, de Fer et de Zinc, caractérisé en ce qu'il présente la formule suivante :

$$Ni_xZn_yCu_zCo_\varepsilon Fe_{2\pm\delta}O_4$$

dans laquelle :

$$x + y + z + \varepsilon = 1 \pm \delta$$

$$\delta \leq 0,05$$

$$0,04 \leq \varepsilon$$

$$0,05 \leq z \leq 0,35$$

$$0 \leq y \leq 0,65$$

Un tel matériau a l'avantage de présenter des pertes réduites.

FIG.3

EP 1 065 676 A1

## Description

L'invention concerne des ferrites à faibles pertes et notamment des matériaux ferrites utilisés à haute, très haute et ultra haute température (entre 1,5 MHz et 500 MHz) et plus particulièrement des matériaux présentant de faibles pertes magnétiques pour des puissances appliquées importantes. Les particularités de ces matériaux sont d'une part leur faible température de frittage (T < 1 000°C) et d'autre part leurs faibles pertes magnétiques à haute, très haute et ultra haute fréquence. Les ferrites décrits dans la présente invention sont particulièrement adaptés pour la réalisation de noyaux magnétiques faibles pertes pour des applications de forte puissance (100 à 1000 W), des applications très large bande de fréquence ou des applications d'électronique intégrée dans la gamme de fréquence des radiocommunications.

Le développement des matériels électroniques est lié à la miniaturisation des composants passifs et actifs. Parmi ces composants, les plus volumineux sont les composants passifs qui réalisent les fonctions résistance, inductance et capacité, et plus particulièrement les composants passifs inductifs ou inductances. Dans les applications « fort niveau » qui mettent en oeuvre de fortes puissances électriques, les pertes du composant inductif sont déterminées essentiellement par les pertes totales du matériau magnétique utilisé pour la réalisation du noyau. Dans la gamme des hautes fréquences (f > 1,5 MHz), on utilise pour ces applications des ferrites de Nickel-Zinc en raison de leurs propriétés magnétiques adaptées et de leur résistivité électrique élevée.

Les ferrites « faibles pertes » destinés aux applications haute fréquence (f > 1 MHz) sont généralement des ferrites de Nickel-Zinc de formule chimique $Ni_xZn_yFe_2O_4$ avec x + y = 1. Ils sont utilisés comme noyaux magnétiques de formes variées (tores, pots, bâtonnets, etc...) permettant la réalisation d'inductances ou de transformateurs bobinés, la partie bobinage étant réalisée à l'aide de fil de cuivre émaillé ou de conducteur coaxial.

Les performances de ces composants sont souvent limitées par les pertes totales du ferrite qui de ce fait déterminent les dimensions du composant et la puissance incidente admissible.

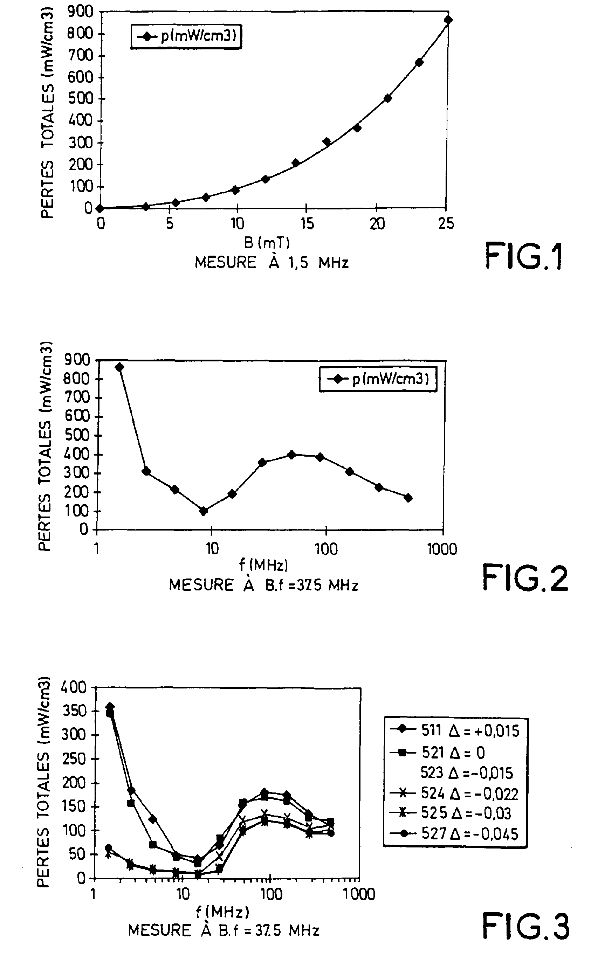

La figure 1 indique les performances d'un ferrite Nickel-Zinc commercial optimisé pour ce type d'applications. Elle représente la variation des pertes totales mesurées à 1,5 MHz en fonction de l'induction et à température ambiante. La mesure est effectuée sur un tore bobiné à l'aide d'un fil de cuivre émaillé. La perméabilité initiale statique du ferrite vaut 125.

La figure 2 représente la variation des pertes totales du même matériau en fonction de la fréquence et pour un produit fréquence induction égal à 37,5 MHz. mT, conditions correspondant au fonctionnement des transformateurs de puissance large bande. Il faut noter que les pertes diminuent lorsqu'on augmente la fréquence, car l'induction dans le matériau diminue. Les pertes totales en fonction de la fréquence et de l'induction peuvent être estimées selon la relation : p (f, B) = cste. $B^\alpha$. $f^\alpha$ où $\alpha \gtrsim 2$ et $\beta \gtrsim 1$ . Elles augmentent de façon monotone lorsque la fréquence augmente.

Les ferrites de type connu présentent des pertes importantes à hautes fréquences et fortes puissances.

L'invention a pour but des ferrites permettant de résoudre cet inconvénient.

L'invention concerne donc un matériau ferrite à base de Nickel, de Cuivre et de Zinc, caractérisé en ce qu'il présente la formule suivante :

$$Ni_xZn_yCu_zCo_\varepsilon Fe_{2\pm\delta}O_4$$

dans laquelle :

$$x + y + z + \varepsilon = 1 \pm \delta$$

$\delta \le 0,05$
$0,04 \le \varepsilon$
$0,05 \le z \le 0,35$
$0 \le y \le 0,65$

L'invention concerne également un composant appliquant le matériau ferrite caractérisé en ce qu'il comporte au moins un noyau en ferrite.

Les différents objets et caractéristiques de l'invention apparaîtront plus clairement dans la description qui va suivre et les figures annexées données à titre d'exemple :

- les figures 1 et 2, des courbes de pertes totales mesurées en fonction de l'induction et de la fréquence ;
- les figures 3 et 4, des courbes et tableau caractéristiques d'un exemple de ferrites selon l'invention ;
- les figures 5 et 6, des courbes caractéristiques de variante de ferrite selon l'invention.

Les ferrites faisant l'objet de la présente invention ont la composition chimique suivante :

$$Ni_xZn_yCu_zCo_\varepsilon Fe_{2\pm\delta}O_4$$

avec :

- $x+y+z+\varepsilon = 1 \pm \delta$
- $\delta \le 0,05$
- $\varepsilon$ supérieur à 0,04 mais de préférence : $0,04 \le \varepsilon \le 0,1$
- $0,05 \le z \le 0,35$
- $0 \le y \le 0,65$

Ils présentent le double avantage suivant :

- ils peuvent être élaborés de façon industrielle avec une diminution importante des températures de chamottage et de frittage.
- leurs pertes magnétiques sont faibles à bas niveau d'induction mais surtout à fort niveau d'induction.

Le procédé d'élaboration des ferrites de la présente invention est décrit dans le brevet n° 96 04316. Les propriétés finales du ferrite sont étroitement liées à la composition chimique et particulièrement au taux de cobalt, à l'écart par rapport à la stoechiométrie en fer et à la pression partielle d'oxygène durant le frittage.

Un premier exemple de réalisation de ferrites de Nickel-Zinc-Cuivre substitués au cobalt de composition chimique

$$Ni_{0,39}Zn_{0,39}Cu_{0,20}Co_{0,021}Fe_{2+\delta}O_4$$

a été réalisé en utilisant le procédé industriel suivant.

Les matières premières utilisées sont des oxydes industriels de Nickel (NiO), de Zinc (ZnO), de Fer ($Fe_2O_3$), de Cuivre (CuO) et de Cobalt ($CO_3O_4$) ou des dérivés (carbonates, hydroxydes ...).

$\delta$ qui représente l'écart en Fer par rapport à la stoechiométrie varie de + 0,015 à - 0,045. Les valeurs négatives correspondent à des défauts de Fer et les valeurs positives à des excès de Fer.

Les poudres sont chamottées à 800°C puis frittées à 950°C pendant 2 heures sous air. Différents échantillons avec différentes valeurs de $\delta$ ont été réalisés. La mesure des pertes totales est effectuée sur des tores de dimensions Dext = 6.8 mm, $D_{int}$ = 3.15 mm, h = 4 mm. La figure 3 donne la variation des pertes totales en fonction de la fréquence pour chaque échantillon.

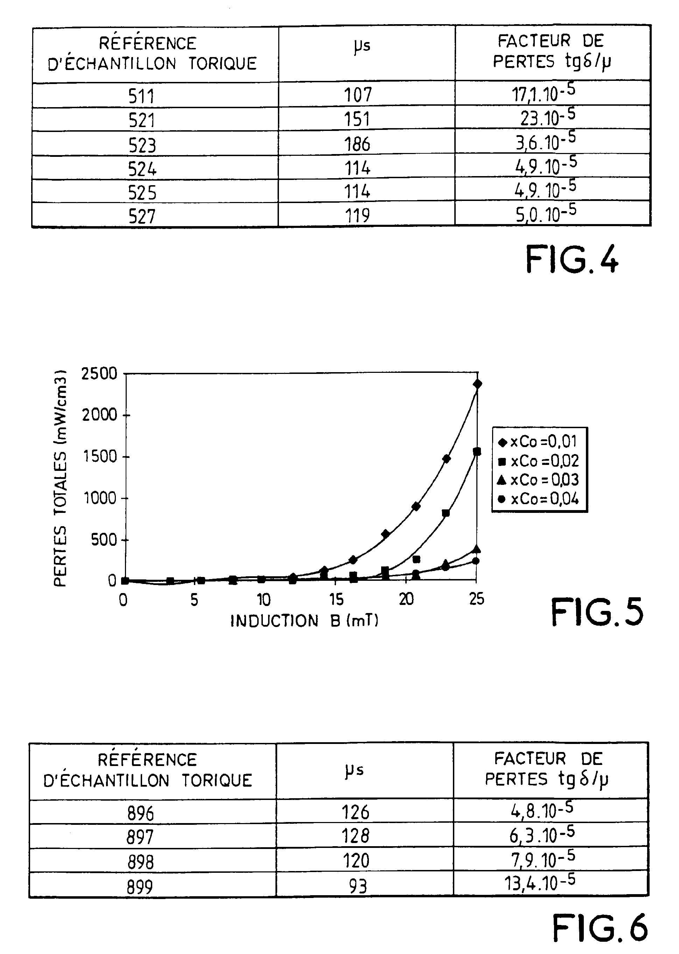

On observe que pour des conditions de mesures identiques (température ambiante et produit B.f = 25 mT.MHz), les pertes totales diminuent lorsque le défaut de Fer augmente. Par contre, les variations de pertes mesurées à bas niveau de puissance comme cela est indiqué sur le tableau de la figure 4 qui représente la perméabilité statique et facteur de pertes à faible niveau de puissance et à 1,5 MHz mesurés à l'aide d'un Q-mètre sur un tore bobiné (dimensions $D_{ext}$ = 6.8 mm, $D_{int}$ = 3.15 mm, h = 4 mm ; nombre de spires = 10), ne suivent pas la même logique : l'échantillon ayant les pertes les plus faibles à bas niveau (référencé 523) présente des pertes à fort niveau intermédiaire.

Selon un deuxième exemple de réalisation, les ferrites de Nickel-Zinc-Cuivre substitués au Cobalt de composant chimique $Ni_xZn_yCu_{0,20}Co_\varepsilon Fe_{1,96}O_4$ où 2x + $\varepsilon$ = 0,86 ont été synthétisés en utilisant un procédé industriel similaire à celui décrit précédemment. Les matières premières utilisées sont des oxydes industriels de Nickel (NiO), de Zinc (ZnO), de Fer ($Fe_2O_3$), de Cuivre

(CuO) et de Cobalt ($Co_3O_4$) ou des dérivés (carbonates, hydroxydes ...).

Pour différentes valeurs de taux de Cobalt, on a mesuré la variation des pertes totales en fonction de l'induction à température ambiante et pour une fréquence de fonctionnement de 1,5 MHz. La figure 4 indique que plus le taux de Cobalt est important, plus les pertes totales sont faibles. Les écarts relatifs sont d'autant plus importants que l'induction est élevée. Par contre, les mesures réalisées à bas niveau de puissance montrent exactement l'inverse (voir tableau figure 6). L'échantillon qui a le moins de pertes à bas niveau a également les pertes totales les plus élevées (référence 896).

Le tableau de la figure 6 donne la perméabilité statique ($\mu s$) et le facteur de perte ($tg\delta/\mu$) à faible niveau de puissance avec B < 1 mT pour différents échantillons à valeurs de Cobalt différentes.

Les mesures ont été faites à l'aide d'un Q-mètre sur un tore bobiné (dimensions $D_{ext}$ = 6.8 mm, $D_{int}$ = 3.15 mm, h = 4 mm ; nombre de spires = 10).

Un matériau en ferrite selon l'invention peut fonctionner à faibles pertes dans une gamme de fréquences de 0,5 à 500 MégaHertz pour des inductions de puissances élevées notamment jusqu'à 30 mT.

Un tel matériau peut être utilisé dans différents types de composants, magnétiques notamment. Par exemple, il peut être utilisé pour la fabrication de noyaux de micro-inductances ou comme composant magnétique (transformateurs, inductances) dans les alimentations à découpage ou convertisseur DC/DC. Il peut être également utilisé pour la fabrication de circulateurs ou de déphaseurs hyperfréquences.

On va maintenant décrire un procédé de fabrication d'un matériau ferrite selon l'invention. Ce procédé comprend les étapes suivantes :

**Pesée des matières premières suivantes**

Oxyde de Nickel (NiO), oxyde de Zinc (ZnO), oxyde de Fer ($Fe_2O_3$), oxyde de Cuivre (CuO) et oxyde de Cobalt ($CO_3O_4$).

Lors de la pesée de l'oxyde de Fer, il est préférable de compenser l'apport de Fer dû à l'usure des éléments de broyage lorsque ceux-ci sont des billes ou des barreaux d'acier.

**Broyage des matières premières**

Cette opération a pour double but de mélanger les différents constituants et de réduire leur taille de grains, les rendant ainsi plus réactifs.

**Chamottage de la poudre**

Ce traitement thermique a pour but de former en partie la phase cristalline recherchée. Cette opération peut typiquement être réalisée entre 750°C et 850°C selon la nature recherchée du matériau ferrite de l'invention, sous air durant environ 2 heures.

## Rebroyage du produit de chamottage

Cette opération est rendue nécessaire par le grossissement des grains de poudre induit par le chamottage. Elle est effectuée dans des conditions analogues à celles du premier broyage.

## Pressage de la poudre

Le pressage est réalisé préférentiellement à l'aide de moules en acier et de presses mécaniques axiales pouvant délivrer des pressions de l'ordre de 0,5 à 2t/cm$^2$. On peut également réaliser un pressage isostatique.

## Frittage

Ce traitement thermique a pour but la formation complète de la phase cristalline recherchée ainsi que la densification de la céramique polycristalline. Pour les matériaux ferrites faisant l'objet de la présente invention, ce traitement peut être réalisé à des températures voisines de 900°C à 1 000°C, avec un temps de palier allant de 2 heures à 15 heures.

Ce frittage peut être réalisé sous air dans des fours conventionnels. Pour avoir moins de pertes pour la même composition de départ, ce frittage peut être réalisé dans des fours étanches sous oxygène ou en atmosphère en teneur en oxygène supérieure à l'atmosphère ambiante ($Po_2 > 20$ % par exemple). Il peut également être fait dans des fours conventionnels avec une circulation d'oxygène.

Le ferrite selon l'invention permet d'optimiser les propriétés à faibles puissances et à très haute fréquence (> 100 MHz).

## Revendications

1. Matériau ferrite à base de Nickel, de Fer et de Zinc, caractérisé en ce qu'il présente la formule suivante :

$$Ni_xZn_yCu_zCo_\varepsilon Fe_{2\pm\delta}O_4$$

   dans laquelle :

$$x + y + z + \varepsilon = 1 \pm \delta$$

$\delta \le 0,05$
$0,04 \le \varepsilon$
$0,05 \le z \le 0,35$
$0 \le y \le 0,65$

2. Matériau selon la revendication 1, caractérisé en ce

que :

$$0,04 \le \varepsilon \le 0,1$$

3. Composant appliquant le matériau ferrite selon l'une des revendications précédentes, caractérisé en ce qu'il comporte au moins un noyau en ferrite.

4. Composant selon la revendication 3, caractérisé en ce que le composant est une inductance.

5. Composant selon la revendication 3, caractérisé en ce que le composant est un transformateur.

6. Composant selon l'une des revendications 1 ou 2, caractérisé en ce qu'il comporte un circulateur ou un déphaseur hyperfréquence en matériau ferrite.

7. Procédé de réalisation d'un matériau selon la revendication 1, caractérisé en ce qu'il comporte les étapes suivantes :

   - pesage des matériaux suivants pour obtenir la composition du matériau ferrite : oxyde de Nickel, oxyde de Zinc, oxyde de Fer, oxyde de Cuivre, oxyde de Cobalt ;
   - broyage des matériaux d'oxydes ;
   - chamottage à une température comprise entre 750°C et 850°C ;
   - rebroyage de la poudre obtenue ;
   - pression de la poudre et frittage à une température voisine de 900° à 1 000°C.

8. Procédé selon la revendication 7, caractérisé en ce que le frittage a lieu sous oxygène ($Po_2 > 20$ %).

9. Procédé selon la revendication 8, caractérisé en ce que le frittage est réalisé dans une enceinte étanche avec une teneur en oxygène supérieure à l'atmosphère ambiante.

10. Procédé selon la revendication 8, caractérisé en ce que le frittage et réalisé dans une enceinte avec une circulation d'oxygène.

MESURE À 1,5 MHz

FIG.1

MESURE À B.f =37.5 MHz

FIG.2

MESURE À B.f = 37.5 MHz

FIG.3

| RÉFÉRENCE D'ÉCHANTILLON TORIQUE | µs | FACTEUR DE PERTES tgδ/µ |
|---|---|---|
| 511 | 107 | $17,1.10^{-5}$ |
| 521 | 151 | $23.10^{-5}$ |
| 523 | 186 | $3,6.10^{-5}$ |
| 524 | 114 | $4,9.10^{-5}$ |
| 525 | 114 | $4,9.10^{-5}$ |
| 527 | 119 | $5,0.10^{-5}$ |

**FIG.4**

**FIG.5**

| RÉFÉRENCE D'ÉCHANTILLON TORIQUE | µs | FACTEUR DE PERTES tgδ/µ |
|---|---|---|
| 896 | 126 | $4,8.10^{-5}$ |
| 897 | 128 | $6,3.10^{-5}$ |
| 898 | 120 | $7,9.10^{-5}$ |
| 899 | 93 | $13,4.10^{-5}$ |

**FIG.6**

Office européen
des brevets

**RAPPORT DE RECHERCHE EUROPEENNE**

Numéro de la demande

EP 00 40 1803

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | EP 0 800 183 A (THOMSON CSF) 8 octobre 1997 (1997-10-08) * revendications 1,4-7 * | 1,4-6 | H01F1/34 C04B35/26 |
| A | PATENT ABSTRACTS OF JAPAN vol. 1998, no. 01, 30 janvier 1998 (1998-01-30) & JP 09 232124 A (TDK CORP), 5 septembre 1997 (1997-09-05) * abrégé * | 1,3-5 | |
| A | PATENT ABSTRACTS OF JAPAN vol. 1996, no. 09, 30 septembre 1996 (1996-09-30) & JP 08 133826 A (KYOCERA CORP), 28 mai 1996 (1996-05-28) * abrégé * | 1,3-5,7 | |

**DOMAINES TECHNIQUES RECHERCHES (Int.Cl.7)**

H01F
C04B

Le présent rapport a été établi pour toutes les revendications

| Lieu de la recherche | Date d'achèvement de la recherche | Examinateur |
|---|---|---|
| LA HAYE | 5 septembre 2000 | Decanniere, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 1803

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2000

| Document brevet cité au rapport de recherche | Date de publication | Membre(s) de la famille de brevet(s) | Date de publication |
|---|---|---|---|
| EP 0800183 A | 08-10-1997 | FR 2747228 A<br>JP 10041120 A<br>US 6071430 A | 10-10-1997<br>13-02-1998<br>06-06-2000 |
| JP 09232124 A | 05-09-1997 | AUCUN | |
| JP 08133826 A | 28-05-1996 | AUCUN | |

EPO FORM P0460

Pour tout renseignement concernant cette annexe : voir Journal Officiel de l'Office européen des brevets, No.12/82